# EUROPÄISCHE PATENTANMELDUNG

(11) **EP 2 456 105 A1**
(43) Veröffentlichungstag der Anmeldung: **23.05.2012**
(21) Anmeldenummer: 10191850.6
(22) Anmeldetag: 19.11.2010
(51) Int. Cl.: H04J 3/06, H04L 12/56

(54) **Vorrichtung zur Implementierung und Anwendung von synchronem Ethernet**

(71) Anmelder: SIEMENS AKTIENGESELLSCHAFT, 80333 München (DE)
(72) Erfinder: Kistner, Timo, 76456, Kuppenheim (DE); Hack, Heiko, 91301, Forchheim (Kersbach) (DE); Schäffler, Andreas, 76131, Karlsruhe (DE)

(57) **Zusammenfassung**

Die Erfindung betrifft eine Vorrichtung (200) zur Bereitstellung eines Referenztakts in einem Ethernet-Netzwerk, wobei die Vorrichtung (200) einen lokalen Taktgeber (202) aufweist, wobei die Vorrichtung (200) zur Aufnahme eines SETS-Moduls (204) ausgebildet ist und eine Steuereinheit (112) aufweist, wobei die Steuereinheit (112) dazu ausgebildet ist festzustellen, ob ein SETS-Modul (204) mit der Vorrichtung (200) verbunden ist, wobei die Steuereinheit ferner dazu ausgebildet ist die Vorrichtung (200) so zu steuern, dass
- im Fall das SETS-Modul (204) mit der Vorrichtung (200) verbunden ist ein durch das SETS-Modul (204) vorgegebener Takt als Referenztakt durch die Vorrichtung (200) verwendet wird,
- im Fall das SETS-Modul (204) nicht mit der Vorrichtung (200) verbunden ist ein durch den lokalen Taktgeber (202) vorgegebener Takt als Referenztakt durch die Vorrichtung (200) verwendet wird.

## Beschreibung

Die Erfindung betrifft eine Vorrichtung zur Bereitstellung eines Referenztakts in einem Ethernet-Netzwerk, ein Verfahren zur Bereitstellung eines Referenztakts in einem Ethernet-Netzwerk, sowie ein Computerprogrammprodukt.

Die Implementierung und Anwendung von synchronem Ethernet (SyncE) erfordert eine hohe Genauigkeit bei der Generierung oder Rückgewinnung des Referenztaktes im jeweiligen Netzwerk. Stehen unterschiedliche Taktquellen innerhalb des Netzwerkes und an einem Gerät zur Verfügung, müssen alle Taktquellen auf einen sogenannten SETS-Baustein (SETS: Synchronous Equipment Timing Source) geführt werden. Durch Konfiguration des Bausteins wird der jeweils beste bzw. höchstpriore Takt ausgewählt und als Referenztakt allen zu synchronisierenden Bauelementen des Gerätes übergeben.

Voraussetzung hierfür ist, dass bei modular aufgebauten Geräten jedes Gerätemodul mit entsprechenden Bauelementen ausgerüstet ist, um den Takt nachzuführen.

Bislang wurden für die Verwendung von synchronem Ethernet generell die relevanten Bauelemente zur Synchronisation auf dem jeweiligen Mainboard der Geräte implementiert. Sofern ein Gerät mit SyncE benötigt wurde, muss zwangsläufig auch die entsprechende Variante des Gerätes, das SyncE unterstützt, eingesetzt werden. Eine nachträgliche Umrüstung von Geräten, die SyncE nicht unterstützen war im Stand der Technik hingegen nicht möglich.

Aufgrund der hohen Kosten von SETS-Bausteinen besteht somit das Problem einer hohen Investition in SyncE-fähige Geräte, ohne zum Investitionszeitpunkt zu wissen, ob die SyncE-Funktionalität in der Praxis überhaupt benötigt wird. Wird hingegen auf die SyncE-Funktionalität verzichtet, ist ein nachträgliches Aufrüsten zur Implementierung und Anwendung von synchronem Ethernet nicht mehr möglich, da der Referenztakt solcher Geräte fest durch die dort hardwaremäßig vorgesehenen Taktgeber vorgegeben ist. Diese Taktgeber haben für SyncE eine zu hohe Ungenauigkeit, so dass eine Inkompatibilität mit SyncE gegeben ist.

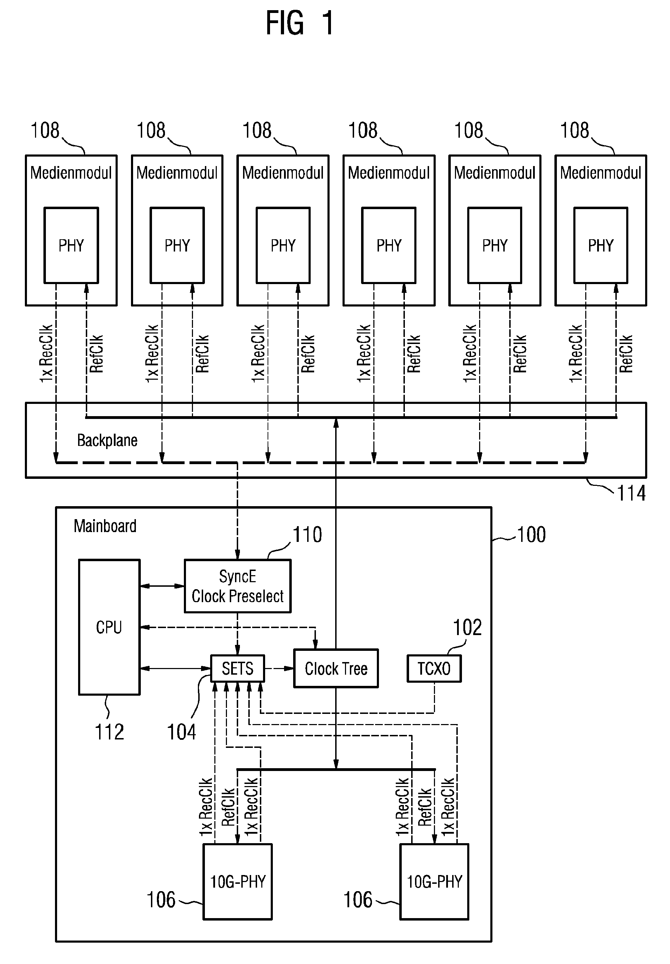

Die Figur 1 zeigt eine Vorrichtung 100 gemäß dem Stand der Technik, auf welcher die SyncE-Funktionalität fest implementiert ist. In dieser Implementierungsform auf dem Mainboard wird grundsätzlich ein sehr präziser und dementsprechend kostenintensiver Oszillator (TCXO) 102 zur lokalen Taktgenerierung zur Verfügung gestellt. Ebenso muss ein SETS-Baustein 104 grundsätzlich auf dem Mainboard implementiert sein, da eine nachträgliche Erweiterung des Geräts für die SyncE-Funktionalität ohne weitreichende hardwaremäßige Umkonfiguration nicht möglich ist.

Alle Taktquellen, sowohl lokal durch den TCXO 102 und zwei beispielhafte 10G-PHYs106 Netzwerkschnittstellen, über welche ein Takt empfangen werden kann, als auch von den (in der Darstellung sechs) Medienmodulen 108, von welchen ebenfalls ein Takt empfangen werden kann, werden auf einen Baustein zur Vorselektion (SyncE Clock Preselect) 110 geführt - eine Realisierung ist z.B. durch ein FPGA möglich. Die Konfiguration erfolgt dabei über die CPU 112. Der SETS-Baustein 104 führt den jeweils priorisierten Takt nach und übergibt diesen Takt der Taktstruktur zur Versorgung der Module, im dargestellten Fall über eine Backplane 114, sowie weiteren im Schema nicht dargestellten Bausteinen auf dem Mainboard 100.

Dem gegenüber liegt der Erfindung die Aufgabe zugrunde, eine Vorrichtung und ein Verfahren vorzuschlagen, durch welche optional ein Gerät mit SyncE-Funktionalität ausgestattet werden kann.

Die der Erfindung zugrunde liegenden Aufgaben werden mit den Merkmalen der unabhängigen Patentansprüche gelöst. Ausführungsformen der Erfindung sind in den abhängigen Patentansprüchen angegeben.

Es wird eine Vorrichtung zur Bereitstellung eines Referenztakts in einem Ethernet-Netzwerk angegeben, wobei die Vorrichtung einen lokalen Taktgeber aufweist, wobei die Vorrichtung zur Aufnahme eines SETS-Moduls ausgebildet ist und eine Steuereinheit aufweist, wobei die Steuereinheit dazu ausgebildet ist festzustellen, ob ein SETS-Modul mit der Vorrichtung verbunden ist, wobei die Steuereinheit ferner dazu ausgebildet ist die Vorrichtung so zu steuern, dass
- im Fall das SETS-Modul mit der Vorrichtung verbunden ist ein durch das SETS-Modul vorgegebener Takt als Referenztakt durch die Vorrichtung verwendet wird,
- im Fall das SETS-Modul nicht mit der Vorrichtung verbunden ist ein durch den lokalen Taktgeber vorgegebener Takt als Referenztakt durch die Vorrichtung verwendet wird.

Ausführungsformen der Erfindung haben den Vorteil, dass alle Funktionen zur Implementierung von synchronem Ethernet vom Mainboard der Vorrichtung ausgelagert und auf optional einsetzbaren Modulen realisiert werden können. Relevant ist hierbei, dass lediglich ein einzelnes Modul (im Folgenden auch als SyncE-Master bezeichnet) benötigt wird, das die Funktionalität des obig angesprochenen SETS-Bausteins zur Verfügung stellt. Der Aufbau übriger mit der Vorrichtung verbindbarer externer Module (im Folgenden als Medienmodule bezeichnet) kann unverändert übernommen werden. Die Backplane der jeweiligen Geräte muss lediglich an die entsprechende Struktur der Referenztakte angepasst werden.

Auf dem Mainboard der Vorrichtung wird also eine Logik vorgesehen, die ohne SyncE-Master den lokalen Takt auf dem Mainboard heranzieht und bei Verwendung des SyncE-Masters den entsprechenden Referenztakt dieses Moduls verwendet. Gegenüber einer festen Implementierung der SyncE-Funktionalität auf der Vorrichtung besteht die Möglichkeit, generell die Vorrichtung einsetzen, ohne die SyncE-Funktionalität explizit auswählen zu müssen. Sofern SyncE nicht erforderlich ist, wird ein entsprechender SyncE-Master nicht benötigt. Nichtsdestotrotz kann die Vorrichtung jederzeit durch das SyncE-Modul um die SyncE-Funktion erweitert werden.

Nach einer Ausführungsform der Erfindung umfasst die Vorrichtung ferner Mittel zum Empfang externer Taktquellen über das Netzwerk. Diese Taktquellen können über das Netzwerk bereitgestellt werden und können beispielsweise wiederum von den externen Modulen stammen.

Vorzugsweise weißt die Vorrichtung eine Taktauswahlvorrichtung auf, welche dazu ausgebildet ist, im Fall das SETS-Modul mit der Vorrichtung verbunden ist eine priorisierte Auswahl aus den externen Taktquellen und/oder weiterer lokaler Taktquellen dem SETS-Modul zu übergeben. Damit kann das SETS-Modul von der Aufgabe entlastet werden, aus einer Vielzahl von zur Verfügung stehenden Takten eine engere Auswahl der Takte zu treffen, welche überhaupt als Referenztakt in Frage kommen. Dies ermöglicht, das SETS-Modul kostengünstiger da technisch weniger komplex herzustellen.

Nach einer Ausführungsform der Erfindung ist die Vorrichtung dazu ausgebildet, den Referenztakt über das Netzwerk externen Modulen bereitzustellen und/oder lokalen Bausteinen der Vorrichtung zu übergeben. Die Vorrichtung kann damit als Referenztaktgeber für SyncE dienen. Ferner kann die Vorrichtung selbst synchrones Ethernet für entsprechende Operationen wie z.B. Automatisierungsaufgaben verwenden.

In einem weiteren Aspekt betrifft die Erfindung ein SETS-Modul für eine obig beschriebene Vorrichtung, wobei das SETS-Modul einen SETS-Baustein und einen lokalen Taktgeber aufweist, wobei die Präzession des lokalen Taktgebers des SETS-Moduls höher ist als die Präzession des lokalen Taktgebers der Vorrichtung.

In einem weiteren Aspekt betriff die Erfindung ein Verfahren zur Bereitstellung eines Referenztakts durch eine Vorrichtung in einem Ethernet-Netzwerk, wobei durch eine Steuereinheit festgestellt wird, ob ein SETS-Modul mit der Vorrichtung verbunden ist, wobei die Steuereinheit die Vorrichtung so steuert, dass
- im Fall das SETS-Modul mit der Vorrichtung verbunden ist ein durch das SETS-Modul vorgegebener Takt als Referenztakt durch die Vorrichtung verwendet wird,
- im Fall das SETS-Modul nicht mit der Vorrichtung verbunden ist ein durch einen lokalen Taktgeber der Vorrichtung vorgegebener Takt als Referenztakt durch die Vorrichtung verwendet wird.

In einem weiteren Aspekt betrifft die Erfindung ein Computerprogrammprodukt mit von einem Prozessor ausführbaren Instruktionen zur Durchführung der Schritte des obig beschriebenen Verfahrens.

Im Folgenden werden bevorzugte Ausführungsformen der Erfindung anhand der Zeichnungen näher erläutert. Es zeigen:
- Figur 2: eine Vorrichtung zur Bereitstellung eines Referenztakts in einem Ethernet-Netzwerk mit SyncE-Master,
- Figur 3: eine Vorrichtung zur Bereitstellung eines Referenztakts in einem Ethernet-Netzwerk ohne SyncE-Master.

Im Folgenden werden einander ähnliche Elemente mit denselben Bezugszeichen gekennzeichnet.

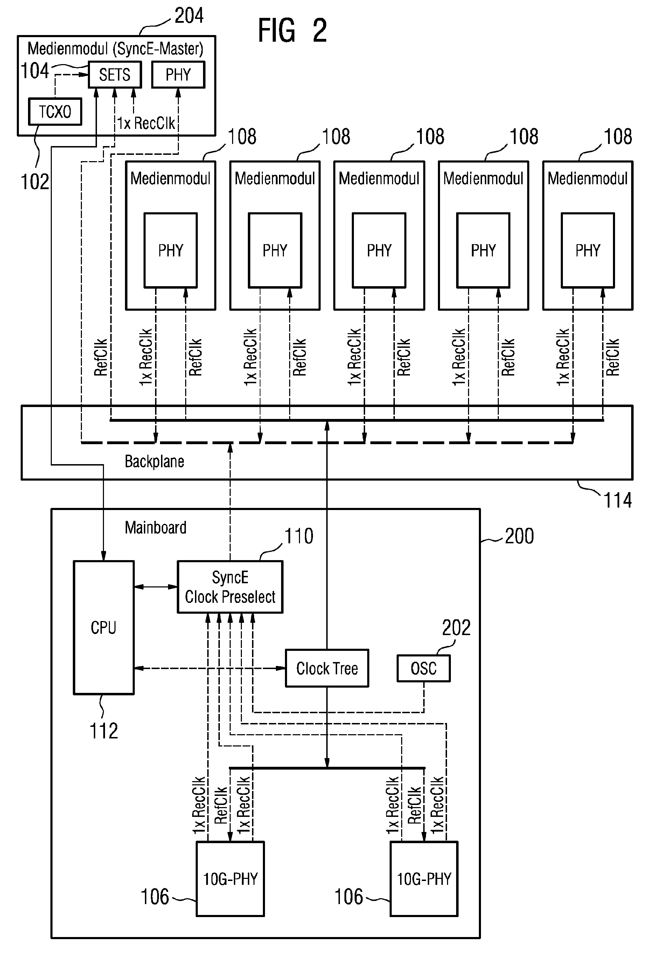

Die Figur 2 zeigt eine Vorrichtung 200 zur Bereitstellung eines Referenztakts in einem Ethernet-Netzwerk mit SyncE-Master (SETS-Modul) 204. Die Vorrichtung weist einen lokalen Taktgeber 202 auf, wobei die Vorrichtung 200 zur Aufnahme des SETS-Moduls 204 ausgebildet ist. Das SETS-Modul 204 ist also optional, wobei Figur 2 die Funktionsweise der Vorrichtung 200 veranschaulicht, wenn das SETS-Modul 204 vorhanden ist. Die Vorrichtung 200 weist ferner eine Steuereinheit auf, wobei die Steuereinheit dazu ausgebildet ist festzustellen, ob ein SETS-Modul 204 mit der Vorrichtung verbunden ist oder nicht. Diese Steuereinheit kann z.B. softwaremäßig in der CPU 112 implementiert sein. Es kann sich bei der Steuereinheit jedoch auch um ein separates Modul der Vorrichtung 200 handeln, oder die Steuereinheit 200 kann auf dem in Fig. 2 gezeigten Mainboard implementiert sein.

Die Steuereinheit ist nun dazu ausgebildet, die Vorrichtung 200 so zu steuern, dass im Fall das SETS-Modul 204 mit der Vorrichtung 200 verbunden ist ein durch das SETS-Modul vorgegebener Takt als Referenztakt durch die Vorrichtung verwendet wird. Dieses Szenario ist in Figur 2 dargestellt.

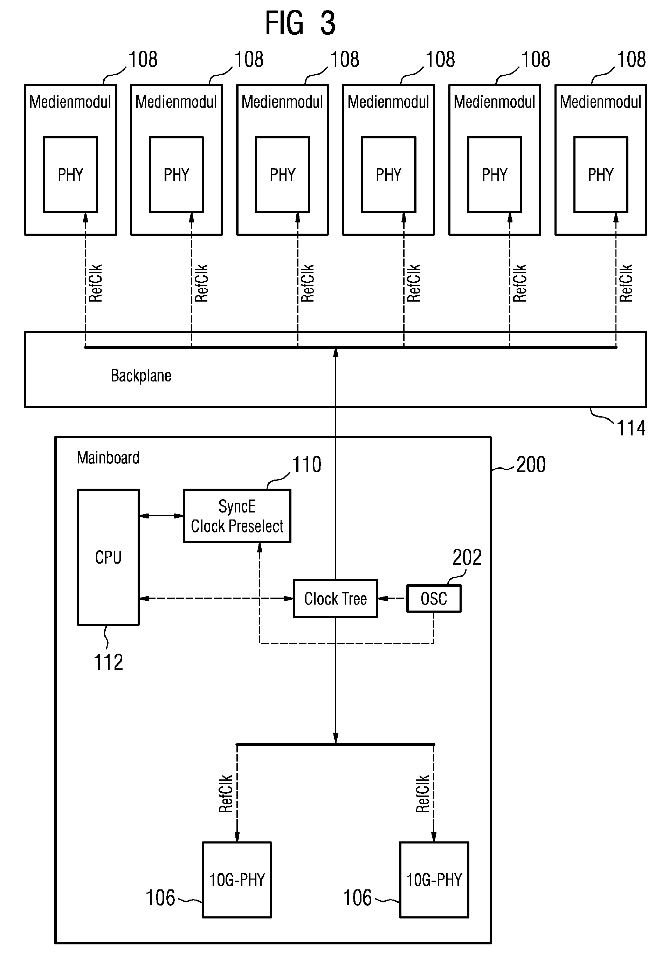

Die Steuereinheit ist ferner dazu ausgebildet, die Vorrichtung 200 so zu steuern, dass im Fall das SETS-Modul 204 mit der Vorrichtung 200 nicht verbunden ist ein durch den lokalen Taktgeber 202 vorgegebener Takt als Referenztakt durch die Vorrichtung verwendet wird. Dieses Szenario ist in Figur 3 dargestellt.

In dem in Figur 2 gezeigten SETS-Modul 204 sind sowohl der hochpräzise Taktgeber des SETS-Moduls (TCXO) 102, als auch der SETS-Baustein 104 vom Mainboard auf ein Medienmodul 204 ausgelagert. Anstelle des TCXO 102 wird lokal ein vergleichsweise unpräziser und dementsprechend kostengünstiger Oszillator 202 vorgesehen, um das jeweilige Gerät auch ohne SyncE-Funktionalität betreiben zu können.

Die lokalen Taktquellen, werden zunächst der Taktauswahlvorrichtung (SyncE Clock Preselect) 110 auf dem Mainboard 200 zugeführt, der auch in diesem Fall von der CPU 112 gesteuert wird. Die priorisierte Taktquelle, sowie die von den Medienmodulen 108 stammenden Takte werden dem SETS-Baustein 104 übergeben. Aus diesen Takten, sowie dem auf dem SyncE-Master implementierten TCXO 102 wird der entsprechende SyncE-Takt generiert. Dieser wird den Medienmodulen 108 und der Taktstruktur auf dem Mainboard übergeben. Dies kann wiederum über eine Backplane 114 erfolgen. Eine Kommunikation mit den Medienmodulen erfolgt dabei unter Verwendung von Ethernet-Paketen.

Ethernet-Schnittstellen "PHY" der Medienmodule 108 dienen wiederum deren Ethernet-Kommunikation mit anderen Modulen. Selbiges gilt für Ethernet-Schnittstellen 106, welche auf dem Mainboard 200 fest installiert sind.

Die Figur 3 zeigt die Anwendung der zuvor beschriebenen modularen Implementierung der Taktstruktur gemäß Figur 2, jedoch ohne SyncE-Funktionalität. Die Strukturen zur Übertragung der Takte bleiben grundsätzlich erhalten, werden jedoch nur teilweise genutzt.

Die CPU 112 ist in der Lage zu erkennen, dass kein SyncE-Master innerhalb des Systems vorhanden ist. Dementsprechend wird automatisch der durch den lokalen Oszillator 202 zur Verfügung gestellte Takt ausgewählt und sowohl den Medienmodulen 108, als auch den lokalen Bausteinen 106 auf dem Mainboard 200 übergeben.

Durch die modulare Implementierung ist eine Variantenbildung des Grundgerätes nicht notwendig, da das Gerät sowohl mit, als auch ohne SyncE-Funktionalität betreiben kann.

### Bezugszeichenliste

- 100: Mainboard
- 102: TCXO
- 104: SETS
- 106: lokales Interface
- 108: Medienmodul
- 110: Taktauswahlvorrichtung
- 112: CPU
- 114: Backplane
- 200: Vorrichtung
- 202: lokaler Taktgeber
- 204: SETS-Modul

## Patentansprüche

1. Vorrichtung (200) zur Bereitstellung eines Referenztakts in einem Ethernet-Netzwerk, wobei die Vorrichtung (200) einen lokalen Taktgeber (202) aufweist, wobei die Vorrichtung (200) zur Aufnahme eines SETS-Moduls (204) ausgebildet ist und eine Steuereinheit (112) aufweist, wobei die Steuereinheit (112) dazu ausgebildet ist festzustellen, ob ein SETS-Modul (204) mit der Vorrichtung (200) verbunden ist, wobei die Steuereinheit ferner dazu ausgebildet ist die Vorrichtung (200) so zu steuern, dass
- im Fall das SETS-Modul (204) mit der Vorrichtung (200) verbunden ist ein durch das SETS-Modul (204) vorgegebener Takt als Referenztakt durch die Vorrichtung (200) verwendet wird,
- im Fall das SETS-Modul (204) nicht mit der Vorrichtung (200) verbunden ist ein durch den lokalen Taktgeber (202) vorgegebener Takt als Referenztakt durch die Vorrichtung (200) verwendet wird.

2. Vorrichtung (200) nach Anspruch 1, ferner mit Mitteln (114; 106) zum Empfang externer Taktquellen über das Netzwerk.

3. Vorrichtung (200) nach Anspruch 2, ferner mit einer Taktauswahlvorrichtung (110), wobei die Taktauswahlvorrichtung (110) dazu ausgebildet ist, im Fall das SETS-Modul (204) mit der Vorrichtung (200) verbunden ist eine priorisierte Auswahl aus den externen Taktquellen und/oder weiterer lokaler Taktquellen dem SETS-Modul (204) zu übergeben.

4. Vorrichtung (200) nach Anspruch 1, wobei die Vorrichtung (200) dazu ausgebildet ist, den Referenztakt über das Netzwerk externen Modulen (108) bereitzustellen und/oder lokalen Bausteinen der Vorrichtung (200) zu übergeben.

5. SETS-Modul (204) für eine Vorrichtung (200) nach einem der vorigen Ansprüche 1-4, wobei das SETS-Modul (204) einen SETS-Baustein (104) und einen lokalen Taktgeber (102) aufweist, wobei die Präzession des lokalen Taktgebers (102) des SETS-Moduls (204) höher ist als die Präzession des lokalen Taktgebers (202) der Vorrichtung (200).

6. Verfahren zur Bereitstellung eines Referenztakts durch eine Vorrichtung (200) in einem Ethernet-Netzwerk, wobei durch eine Steuereinheit (112) festgestellt wird, ob ein SETS-Modul (204) mit der Vorrichtung (200) verbunden ist, wobei die Steuereinheit die Vorrichtung (200) so steuert, dass
- im Fall das SETS-Modul (204) mit der Vorrichtung (200) verbunden ist ein durch das SETS-Modul (204) vorgegebener Takt als Referenztakt durch die Vorrichtung (200) verwendet wird,
- im Fall das SETS-Modul (204) nicht mit der Vorrichtung (200) verbunden ist ein durch einen lokalen Taktgeber (202) der Vorrichtung (200) vorgegebener Takt als Referenztakt durch die Vorrichtung (200) verwendet wird.

7. Computerprogrammprodukt mit von einem Prozessor ausführbaren Instruktionen zur Durchführung der Schritte des Verfahrens gemäß Anspruch 6.
